# EUROPEAN PATENT APPLICATION

(11) **EP 0 848 557 A2**
(43) Date of publication of application: **17.06.1998**
(21) Application number: 97309207.5
(22) Date of filing: 14.11.1997
(51) Int. Cl.: H04N 7/26

(54) **Subband image encoding method**

(30) Priority: 15.11.1996 US 746702
(71) Applicant: TEXAS INSTRUMENTS INC., Dallas, Texas 75243 (US)
(72) Inventor: Liang, Jie, Dallas, Texas 75252 (US)
(74) Representative: Legg, Cyrus James Grahame

(57) **Abstract**

A method of image encoding using subband decomposition followed by separate coding of the highest level lowpass image plus zerotree coding of the higher bands.

## Description

### BACKGROUND OF THE INVENTION

The invention relates to video communication methods and devices, and, more particularly, to digital communication and storage systems using compressed video data.

Video communication (television, teleconferencing, and so forth) typically transmits a stream of video frames (pictures, images) along with audio over a transmission channel for real time viewing and listening or storage. However, transmission channels frequently add corrupting noise and have limited bandwidth. Consequently, digital video transmission with compression enjoys widespread use. In particular, various standards for compression of digital video have emerged and include H.261, MPEG-1, and MPEG-2, with more to follow, including in development H.263 and MPEG-4. There are similar audio compression methods.

Tekalp, Digital Video Processing (Prentice Hall 1995), Clarke, Digital Compression of Still Images and Video (Academic Press 1995), and Schafer et al, Digital Video Coding Standards and Their Role in Video Communications, 83 Proc. IEEE 907 (1995), include summaries of various compression methods, including descriptions of the H.261, MPEG-1, and MPEG-2 standards plus the H.263 recommendations and indications of the desired functionalities of MPEG-4.

H.261 compression uses interframe prediction to reduce temporal redundancy and discrete cosine transform (DCT) on a block level together with high spatial frequency cutoff to reduce spatial redundancy. H.261 is recommended for use with transmission rates in multiples of 64 Kbps (kilobits per second) to 2 Mbps (megabits per second).

The H.263 recommendation is analogous to H.261 but for bitrates of about 22 Kbps (twisted pair telephone wire compatible) and with motion estimation at half-pixel accuracy (which eliminates the need for loop filtering available in H.261) and overlapped motion compensation to obtain a denser motion field (set of motion vectors) at the expense of more computation and adaptive switching between motion compensation with 16 by 16 macroblock and 8 by 8 blocks.

MPEG-1 and MPEG-2 also use temporal prediction followed by two dimensional DCT transformation on a block level as H.261, but they make further use of various combinations of motion-compensated prediction, interpolation, and intraframe coding. MPEG-1 aims at video CDs and works well at rates about 1-1.5 Mbps for frames of about 360 pixels by 240 lines and 24-30 frames per second. MPEG-1 defines I, P, and B frames with I frames intraframe, P frames coded using motion-compensation prediction from previous I or P frames, and B frames using motion-compensated bi-directional prediction/interpolation from adjacent I and P frames.

MPEG-2 aims at digital television (720 pixels by 480 lines) and uses bitrates up to about 10 Mbps with MPEG-1 type motion compensation with I, P, and B frames plus added scalability (a lower bitrate may be extracted to transmit a lower resolution image).

However, the foregoing MPEG compression methods result in a number of unacceptable artifacts such as Stockiness and unnatural object motion when operated at very-low-bit-rates. Because these techniques use only the statistical dependencies in the signal at a block level and do not consider the semantic content of the video stream, artifacts are introduced at the block boundaries under very-low-bit-rates (high quantization factors). Usually these block boundaries do not correspond to physical boundaries of the moving objects and hence visually annoying artifacts result. Unnatural motion arises when the limited bandwidth forces the frame rate to fall below that required for smooth motion.

MPEG4 is to apply to transmission bitrates of 10 Kbps to 1 Mbps and is to use a content-based coding approach with functionalities such as scalability, content-based manipulations, robustness in error prone environments, multimedia data access tools, improved coding efficiency, ability to encode both graphics and video, and improved random access. A video coding scheme is considered content scalable if the number and/or quality of simultaneous objects coded can be varied. Object scalability refers to controlling the number of simultaneous objects coded and quality scalability refers to controlling the spatial and/or temporal resolutions of the coded objects. Scalability is an important feature for video coding methods operating across transmission channels of limited bandwidth and also channels where the bandwidth is dynamic. For example, a content-scalable video coder has the ability to optimize the performance in the face of limited bandwidth by encoding and transmitting only the important objects in the scene at a high quality. It can then choose to either drop the remaining objects or code them at a much lower quality. When the bandwidth of the channel increases, the coder can then transmit additional bits to improve the quality of the poorly coded objects or restore the missing objects.

For encoding an I frame, Shapiro, Embedded Image Coding Using Zerotrees of Wavelet Coefficients, 41 IEEE Tr.Sig.Proc 3445 (1993) provides a wavelet hierarchical subband decomposition which groups wavelet coefficients at diffrent scales and predicts zero coefficients across scales. This provides a fully embedded bitstream in the sense that the bitstream of a lower bitrate is embedded in the bitstream of higher bitrates.

Villasenor et al, Wavelet Filter Evaluation for Image Compression, 4 IEEE Tr.Image Proc. 1053 (1995) discusses the wavelet subband decomposition with various mother wavelets.

However, more efficient coding at low bitrates remains a problem.

Hardware and software implementations of the H.261, MPEG-1, and MPEG-2 compression and decompression exist. Further, prgrammable microprocessors or digital signal processors, such as the Ultrasparc or TMS320C80, running appropriate software can handle most compression and decompression, and less powerful processors may handle lower bitrate compression and decompression.

### SUMMARY OF THE INVENTION

The present invention provides video compression and decompression with hierarchical subband (including wavelet) coding using zerotrees but with an initial partition of subbands into the baseband plus three sets of higher bands according to hierarchy: first code the baseband separately (such as by DPCM) and then zerotree code each of the sets of higher bands with its own initial threshold.

The present invention also provides video systems with applications for this coding, such as video telephony and fixed camera surveillance for security, including time-lapse surveillance, with digital storage in random access memories.

Advantages include more efficient low bitrate video coding than embedded zerotree wavelet coding while retaining the fully embedded feature. This permits low bitrate teleconferencing and also surveillance information storage.

### BRIEF DESCRIPTION OF THE DRAWINGS

The present invention will now be further described by way of example, with reference to the accompanying drawings in which:
Figure 1 is a flow diagram for a preferred embodiment encoding method in accordance with the present invention;
Figures 2a-c illustrates subband hierarchical decomposition;
Figures 3a-c show empirical results;
Figure 4 shows a preferred embodiment telephony system implementing the present invention;
Figure 5 illustrates a preferred embodiment surveillance system implementing the present invention; and
Figure 6 is a flow diagram for a preferred embodiment video compression technique in accordance with the present invention.

### DESCRIPTION OF THE PREFERRED EMBODIMENTS

### Preferred embodiment single frame zerotree coding

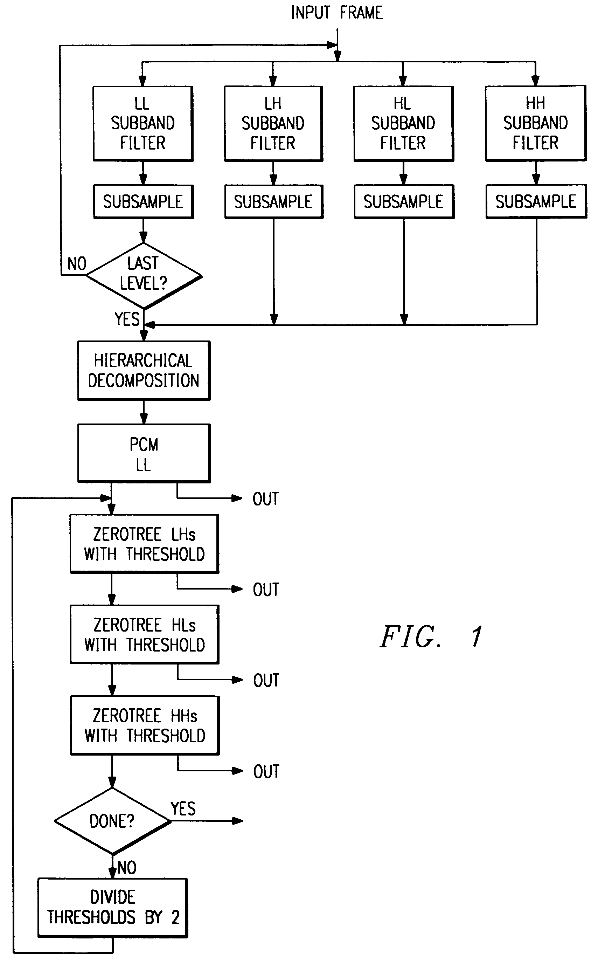

Figure 1 is a flow diagram of a first preferred embodiment frame encoding using wavelet hierarchical decomposition together with PCM in the baseband plus zerotrees in the higher bands. The flow diagram will be explained with the help of an example for simplicity; thus presume a 144 by 176 frame of 8-bit pixels (-128 to + 127) and presume four scale levels in a wavelet hierarchical decomposition. The value of the pixel at (j,k) may be denoted x(j,k) for 0≤j≤143 and O≤k≤175.

To begin the decomposition, first filter the 144 by 176 frame with each of the four filters h_{O}(j)h_{O}(k), h_{O}(j)h₁(k), h₁(j)h_{O}(k), and h₁(j)h₁(k) to give 144 by 176 filtered frames (boundary pixel values are used to extend the frame for computations which otherwise would extend beyond the frame). A computationally simple h_{O}(k) function equals 1/√2 at k=0,1, and is zero for all other k; h₁(k) equals 1/√2 at k=0, -1/√2 at k=1, 1/8√2 at k=2,3, -1/8√2 at k=-1,-2, and zero for all other k. The Villasenor article cited in the Background lists other filter functions. The filtering is a mathematically convolution with the functions, so h_{O} is a lowpass filter in one dimension (averages over two adjacent pixels) and hᵢ is a highpass filter in one dimension (essentially a difference of adjacent pixels). Thus the four filters are two-dimensional lowpass-lowpass, lowpass-highpass, highpass-lowpass, and highpass-highpass, respectively.

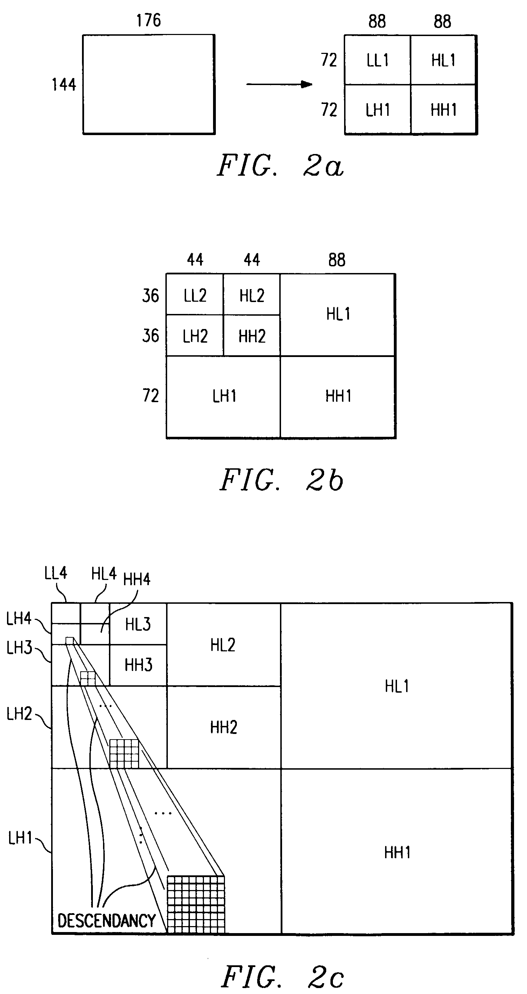

Next, subsample each filtered frame by a factor of four by retaining only pixels at (j,k) with j and k both even integers. This subsampling will yield four 72 by 88 pixel images, denoted LL1, LH1, HL1, and HH1, respectively, with pixel locations (j,k) relabelled for 0≤j≤71 and 0≤k≤87. This forms the first level of the decomposition, and the four images can be placed together to form a single 144 by 176 image which makes visualization of the decomposition simple as illustrated in Figure 2a. Thus LL1 is a lower resolution version of the original frame and could be used as a compressed version of the original frame.

The LL1, LH1, HL1, and HH1 images can be used to reconstruct the original frame by first interpolating each image by a factor of four (to restore the 144 by 176 size), then filtering the four 144 by 176 images with filters g₀(j)g₀(k), g₀(j)g₁(k), g₁(j)g₀(k), and g₁(j)g₁(k), respectively, and lastly pixelwise adding these four filtered images together. The functions go and g₁ are lowpass and highpass filters, respectively, and relate to ho and h, by g0(n) = (-l) h₁(n) and g₁(n) = (-l)h_{O}(n). The hₒ, h₁, gₒ, and g₁ functions are symmetric about 1/2, rather than O as would be the case for an odd tap filter, so after reconstruction the pixel index is shifted by 1 to adjust for the two 1/2 pixel shifts during two filterings. The second level in the decomposition simply repeats the four filterings with the ho and h, functions plus subsampling by a factor of four but using the LL1 image as the input. Thus the four filtered images are each 36 by 44 and denoted LL2, LH2, HL2, and HH2. As before, the LL2, LH2, HL2, and HH2 can be arragned to visualize the decompostion of LL1 and also could be used for recontruction of LL1 with the g_{O} and g₁ based filters. The LH1, HL1, and HH1 images remain unfiltered. Repeat this decomposition on LL2 by filtering with the four filters based on ho and h, followed by subsampling to obtain LL3, LH3, HL3, and HH3 which are 18 by 22 pixel images. Again, LL3, LH3, HL3, and HH3 can be arranged to visualize the decomposition of LL2.

Complete the hierarchical four level decomposition of the original frame by a last filtering with the four filters based on hₒ and h₁ followed by subsampling of LL3 to obtain LL4, LH4, HL4, and HH4 which are 9 by 11 pixel images. Figure 2c illustrates all of the resulting images arranged to form an overall 144 by 176 pixel layout. Figure 2c also indicates the tree relation of pixels in various levels of the decmposition; indeed, a pixel y(j,k) in LH4 is the result of filtering and subsampling of pixels x(j,k) in LL3:
y(j,k) = ho(o)h_{'}(o)x(2j,2k) + ho(o)h₁(l)x(2j,2k-l)
ho(O)h₁(-l)x(2j,2k+1) + ho(o)h₁(2)x(2j,2k-2)
ho(0)h₁(-2)x(2j,2k +2) + ho(O)h₁(3)x(2j,2k-3)
ho(l)h₁(O)x(2j- 1 ,2k) + ho( l)h₁ (l)x(2j- 1,2k- 1)
ho(l)h₁(-l)x(2j-1,2k+1) + ho(l)h₁(2)x(2j-1,2k-2)
ho( l)h₁(-2)x(2j- 1,2k +2) + ho( l)h₁(3)x(2j-1,2k-3)

Because the filtering plus subsampling is basically computing y(j,k) from the 2 by 2 area in LL3 (the values of h₁(k) are small except tor k=0, 1), there are four pixels x(2j-1, 2k-1), x(2j-1,2k), x(2j,2k-1) and x(2j,2k)) in LL3 which determine y(i,k) in LH4. Now these four pixels in LL3 are related to the four pixels in LH3 at the same positions ((2j- 1, 2k-1), (2j-1,2k), (2j,2k-1) and (2j,2k)) because they all were computed from essentially the same 16 locations in LL2. Thus the pixel y(j,k) in LH4 is called the parent of the related pixels z(2j-1,2k-1), z(2j-1,2k), z(2j,2k-1) and z(2j,2k) in LH3 and each of these four pixels in LH3 is a child of the parent pixel in LH4.

After the decomposition of the original frame into LL4, LH4, ..., HH1, first encode the 9 by 11 LL4 with PCM (pulse code modulation) which just quantizes each of the 99 pixel values and ignores any spatial correlations. Basically, each pixel in LL4 is the dc component (average) of the corresponding 16 by 16 macroblock in the original frame, and thus is a low resolution version of the original frame. This encoding of LL4 takes 99N bits where N bits are used to encode each pixel.

Next, use a zerotree coding for each of the three highpass channels. In particular, first find the maximum of the magnitudes of the pixels in LH4, LH3, LH2, and LH1. Then set an initial quantization threshold, T_{LH} equal to one half of the maximum of the magnitudes. For the example with 8-bit pixels, T_{LH}, may be something like 100. Then encode LH4 by placing each of the 99 pixels into one of the following classes: (i) POS (positive significant) if the pixel value is positive and greater than T_{LH}, (ii) NEG (negative significant) if the pixel value is negative and magnitude is greater than To, (iii) ZTR (zerotree root) if the pixel value is not greater than T_{LH} and also all descendant pixels (children pixels in LH3, LH2 children of these LH3 children pixels, and LH1 children pixels of these LH2 children pixels) also have magnitudes not greater than T_{LH}, and (iv) IZ (isolated zero) if the pixel has magnitude not greater than T_{LH} but at least one of the descendant pixels has magnitude greater than T_{LH}. The 99 pixels in LH4 are raster scanned, so the encoding may take 198 bits with each pixel taking two bits.

Then do the same steps of finding a maximum pixel magnitude and threshold T_{HL} for the pixels in HL4, HL3, HL2, and HL1, and excode with the same classes POS, NEG, ZTR, and IZ but using T_{HL}. as the quantization threshold. Then do the same for HH4, HH3, HH2, and HH1 with a threshold T_{HH} The tranmission of these encodings of LH4, HL4, and HH4 added to the prior encoding of LL4 increases the resolution of the final reconstructed frame by using a value of ±1.5 T_{LH} for pixels in coded POS, NEG and a value of O for pixels coded ZTR, IZ in LH4 and similarly using ±1.5 T_{HL} and ±1.5 T_{HH} HL4 and HH4.

Continue the encoding for LH3, HL3, HH3, LH2, HL2, HH2, LH1, HL1, and HH1 using the corresonding T_{LH} T_{HL}, or T_{HH} Note that all children pixels of a zerotree root pixel need not be coded because of the definition of zerotree root, so these pixels may be skipped in the scanning and the decoder receiving the bitstream will fill in zeros. Note that in LH1, HL1, and HH1 there are no descendant pixels, so a simple zero is used instead of zerotree root and isolated zero. This encoding essentially is a map of the location (and sign) of significant pixels (greater than threshold).

Then scan through the significant pixels (those encoded either as POS or NEG) and encode each with an additional bit to distinguish between the pixel value in the range **[**T_{XX}, 1.5T_{XX}**]** and **[**1.5T_{XX}, 2T_{XX}] where the subscript T_{XX} means the appropriate threshold.

Replace all significant pixels with zeros in LH4, HL4, ... HL1, HH1; the significant pixels were identified in the foregoing encoding and their values are listed for subsequent finer quantizations and encodings. Also replace T_{LH} with T_{LH}/2, T_{HL} with T_{HL}/2, and T_{HH} with T_{HH},/2, and repeat the encoding as POS, NEG, ZTR, or IZ with the new thresholds for the LH4, HL4, ... HL1, HH1 just modified by zeros replacing previously significant pixels. This essentially refines the quantization and defines new significant pixels. Again the scan the LH4, HL4, ... HL1, HH1 with skipping the previously significant pixels which were replaced by zero and transmit the encodings POS, NEG, ZTR, and IZ. Again, this repesents a further resolution incease for a frame reconstructed from the code generated so far using values for significant pixels as the the midpoints of the quantization ranges.

Again, repeat the scan throng the new list of significant pixels and encode an additional bit to distinguish between the pixel value in the upper halves of the appropriate quantization ranges **[**0.75T_{XX}, T_{XX}], **[**1.25T_{XX}, 1.5T_{XX}] and **[**1.75T_{XX}, 2T_{XX}**]** and the lower halves of the ranges **[**0.5T_{XX}, 0.75T_{XX}], **[**T_{XX}, 1.25T_{XX}**]** and **[**1.5T_{XX}, 1.75T_{XX}**]**

Similarly, again replace significant pixels with zeros and replace the threshold with their halves: T_{LH}/2 with T_{LH}/4, T_{HL}/2 with T_{HL}/4, and T_{HH}/2 with T_{HH}/4; and repeat the encoding as POS, NEG,ZTR, or IZ with the new thresholds for the LH4, HL4, ... HL1, HH1 just modified by zeros replacing previously significant pixels.

This successive increases in quantization threshold provides incrasingly higher resolution reconstructions of the original frame. Further, if the three initial thresholds, T_{LH}, H_{HL}, and T_{HH}, are greatly different, then the bitstream of the images with the smaller threshold could be deferred until the larger threshold has been reduced to a comparable size during the iteration. For example, if T_{LH}, is twice T_{HL}, then all pixels in the LHs are less than T_{HL}, and insignificant compared to at least one pixel in the HLs. This means with the resolution of the largest pixel in the HLs, all of the pixels in the LHs are zero and are not needed for a reconstruction at this resolution. Conversely, if the three initial thresholds are all somewhat comparable in size, then a single threshold could be used for all three channels for simplicity.

The separate PCM encoding of LL4 often removes the largest magnitude pixels and thereby allows the encoding of LH4, HL4, ... HH1 to Bill with a smaller initial quantization threshold and be more efficient than without the separate LL4 encoding. Similarly, the use of a separate threhold determination for each of the three highpass channels allows for more precise initial quantization thresholds at the cost of transmitting three initial quantization thresholds in place of a single threshold.

The overall bitstream has an initial block of bits fully encoding LL4, then a block of bits encoding significnat pixel location using initial quantization thresholds T_{LH}, T_{HL}, T_{HH} then a block of bits adding one bit accuracy to each of the significant pixels, then a block of bits encoding significnat pixel location using refined quantization thresholds T_{LH}/2, T_{HL}/2, T_{HH}/2, then a block of bits adding one bit accuracy to each of the significant pixels (both with initial quantization thresholds and refined thresholds), and so forth units target quantization refinement or other bitrate constraint occurs.

### Fully embedded preferred embodiment

The preceding first preferred embodiment fully codes the highest level LL image (9 by 11 LL4 in the example) prior to encoding LH, HL, or HH images with separate initial quantization thresholds. In contrast, the second preferred embodiment applies successive refining quantization coding to the highest level LL image analogous to the reaming quantization threhsolds in the zerotree coding of the LH, HL, and HH images. For the example, the most significant bits of the PCM codes of the LL4 pixels would be the first 99 bit block transmitted, then the first level zerotree coding for LH, HL, and HH, followed by a 99 bit block for the second most significant bit of the LL4 PCM codes, and so forth. This provides full embedding of lower resolution information as the initial portion of higher resolution information on multiple scales.

### DPCM preferred embodiment

The preceding first and second preferred embodiments code the highest level LL image (9 by 11 for LL4 in the example) with PCM and thereby fail to take advantage of spatial correlations. The third preferred embodiment follows the first preferred embodiment but with DPCM coding of the higherst LL level.
In particular, first compute a quantized value for each pixel value with a preset quantized step size. Next, for each pixel compute a difference from adjacent pixels as follows. Begin with the top and left boundary (quantized) pixels w(O,k) and w(j,O) and recursively form the difference pixels Z(j,O) = w(j,O) - w(j-l,O) for 1 ≤j ≤9 and z(O,k) = w(O,k) - w(O,k-1) for 1≤ K≤ 11. Thus with w(O,O) and the differences z(j,O) and z(O,k) the w(j,O) and w(O,k) can be reconstructed, but the magnitudes of the Z(j,O) and z(O,k) typically are much smaller and require fewer bits to encode.

Next, recursively form all other difference pixels by prediction from the smaller derivative: z(j,k) = w(j,k) - w(j-l,k) if w(j,k-1)-w(j-l,k-1) < w(j-l,k)-w(j-l,k-1) or z(j,k) = w(j,k) - w(j,k-l) otherwise. Again, w(j,k) can be reconstructed from w(O,O) and the z(j,k)s, but the magnitudes of the z(j,k)s should be smaller than those of the w(j,k)s. Of course, w(O,O) may be large and is directly encoded.

Then encode the z(j,k)s with an adaptive variable length entropy code as follows. Empirically, the z(∼,k) fall into two classes: (A) small values, typically less than 15 due to the effectiveness of the prediction, and (B) relatively large values due to the variance of the data. The preferred embodiment divides the code into two sets: one set for small values that will be coded with shorter length codes, and the other set for large values. Because within each set, the values are generally evenly distributed (entropy high), to simply implementation, use the same number of bits to code each symbol.

Next, compute the maximum of the Z(j,k); call this maximum G. The maximum number of bits_{bits} to encode each of the remaining z(j,k) thus is:
bits = ceil[log₂(G+l)] + 1 where 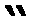 ceil²[.**]**" is the ceiling function whose value is the smallest integer not greater than the function's argument. Then search for the optimal number of bits, nₒₚₜ which divides the z(j,k) into two sets with one set coded with nₒₚₜ bits and the other set coded with n_{bits}+ 1 bits. For a total of N z(j,k)s (this would be 98 in the example), let b be the number of bits required for each z(j,k) in a set of smallest magnitude z(j,k)s. Then the coding gain per symbol over PCM is:
gain = (n_{bits} - b) (2⁶ 1)/N - 1

Thus find nₒₚₜ by looping through all values of b (b = 0, 1, 2, ..., n_{bits}) and taking nₒₚₜ to be the value of b which maximizes the gain. This DPCM typically saves about 20% of the total bits used in PCM.

### Color preferred embodiment

The previous preferred embodiments only considered single value pixels. For color frames, three separate frames (Y frame of intensity pixels, U and V frames for red and blue chrominance pixels Cr and Cb) with typically different sizes (Y is full resolution, such as 144 by 176, and U and V are half resolution, such as 72 by 88). Then each of the three flames is encoded by one of the foregoing preferred embodiments. The bitstream could just concatenate: Y-stream Cr-stream Cb-stream.

### Syntax of preferred embodiment

The preferred embodiment bitstreams could have the following syntax for each color component of the baseband: Qb Bytes WO bitsO bitsl DPCM stream, where 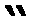 Qb" (8 bits) is the quantization step size for the baseband, 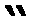 Bytes*"* is the length of the baseband bitstream in bytes, 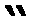 WO*"* is the quantized value of w(O,O), 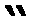 bits0*"* is the maximum number of bits for the baseband z(j,k)s, 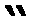 bitsl*"*. is the number of bits per symbol for the set of small values, and "DPCM stream*"* is the bit stream for the quantized z(j,k) excluding w(O,O).

For the higher bands, the syntax could be: Q Size Stream, where 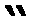 Q*"* is the initial threshold (16 bits) for the zerotree quantization, 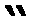 Size*"* (16 bits) is the length of "Stream" in bytes, and 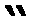 Stream*"* is the bitstream.

### Empirical results

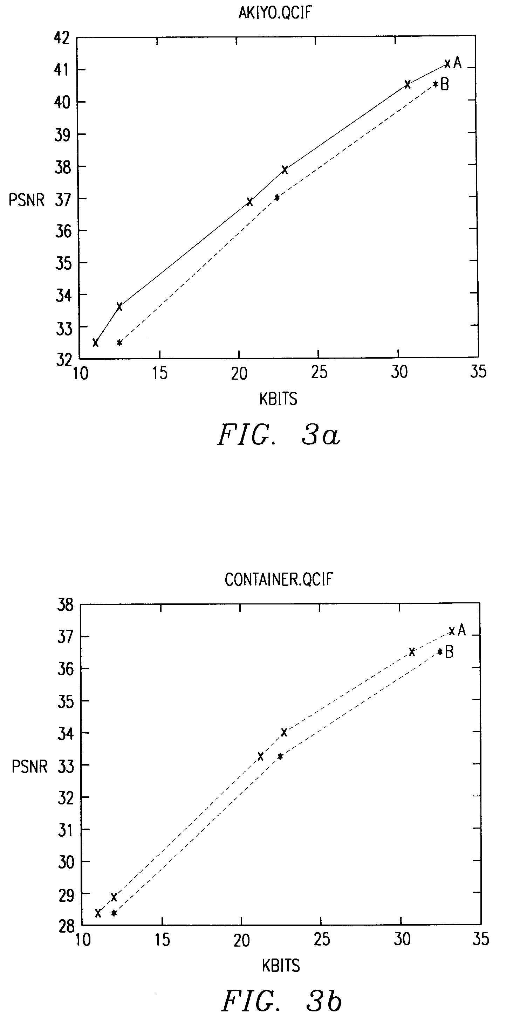

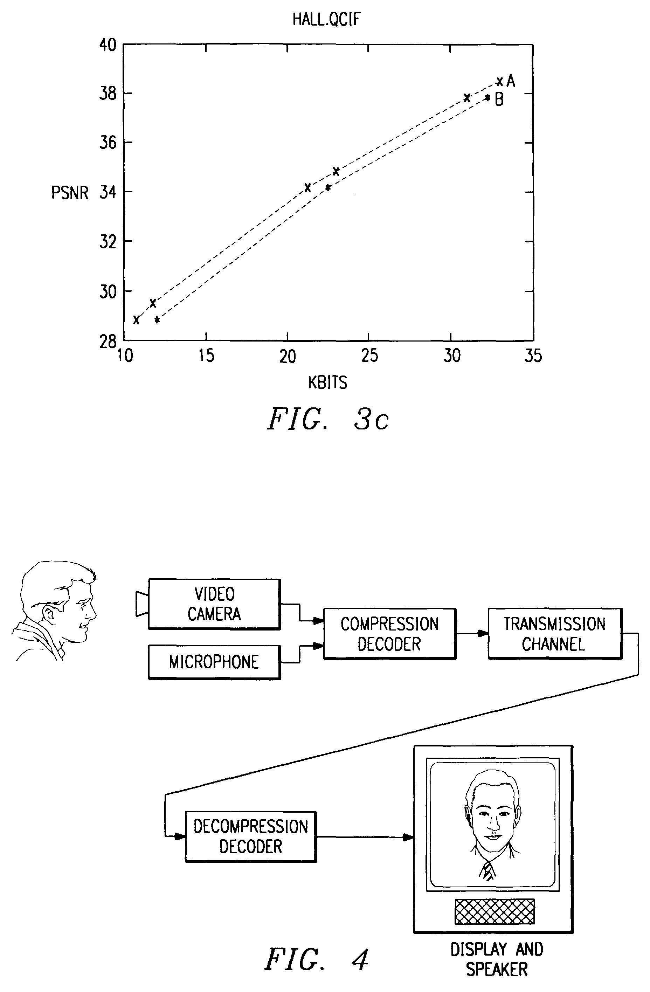

Figures 3a-c illustrates comparisons for the peak signal to noise ratio (PSNR) for the third preferred embodiment coding as compared to the zerotree method of Shapiro noted in the backgound for three different standard test frames at various bitrates. The preferred embodiment roughly provides up to 1 dB improvement.

### Overview of Compression and Decompression

Figure 4 illustrates in block diagram a preferred embodiment video-telephony (teleconferencing) system which transmits both speechh and an image of the speaker using preferred embodiment compression, encoding, decoding, and decompression including error correction with the encoding and decoding. Of course, Figure 1 shows only transmission in one direction and to only one receiver; in practice a second camera and second receiver would be used for transmission in the opposite direction and a third or more receivers and transmitters could be connected into the system. The video and speech are separately compressed and the allocation of transmission channel bandwidth between video and speech may be dynamically adjusted depending upon the situation. The costs of telephone network bandwidth demand a low-bit-rate transmission. Indeed, very-lowbit-rate video compression finds use in multimedia applications where visual quality may be compromised.

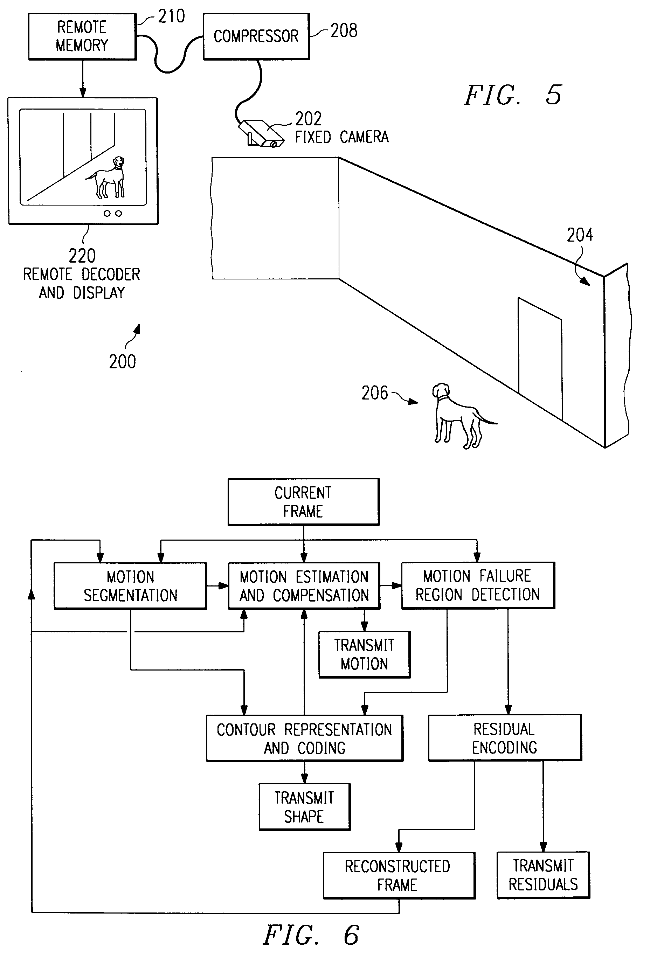

Figure 5 shows a first preferred embodiment surveillance system, generally denoted by reference numeral 200, as comprising one or more fixed video cameras 202 focussed on stationary background 204 (with occasional moving objects 206 passing in the field of view) plus video compressor 208 together with remote storage 210 plus decoder and display 220. Compressor 208 provides compression of the stream of video images of the scene (for example, 30 frames a second with each frame 144 by 176 8-bit monochrome pixels) so that the data transmission rate from compressor 208 to storage 210 may be very low, for example 22 Kbits per second, while retaining high quality images. System 200 relies on the stationary background and only encodes moving objects (which appear as regions in the frames which move relative to the background) with predictive motion to achieve the low data rate. This low data rate enables simple transmission channels from cameras to monitors and random access memory storage such as magnetic hard disk drives available for personal computers. Indeed, a single telephone line with a modem may transmit the compressed video image stream to a remote monitor. Further, storage of the video image stream for a time interval, such as a day or week as required by the particular surveillance situation, will require much less memory after such compression.

Video camera 202 may be a CCD camera with an incamera analog-to-digital convertor so that the output to compressor 208 is a sequence of digital frames as generally illustrated in Figure 5; alternatively, analog cameras with additional hardware may be used to generate the digital video stream of frames. Compressor 208 may be hardwired or, more conveniently, a digital signal processor (DSP) with the compression steps stored in onboard memory, RAM or ROM or both. For example, a TMS320C50 or TMS320C80 type DSP may suffice. Also, for a teleconferencing system as shown in Figure 1, error correction with real time reception may be included and implemented on general purpose processors.

Figure 6 shows a high level flow diagram for the preferred embodiment video compression methods which include the following steps for an input consisting of a sequence of frames, Fₒ, F₁, F₂ ...., with each frame 144 rows of 176 pixels or 288 rows of 352 pixels and with a frame rate of 10 frames per second. Details of the steps appear in the following sections.

Frames of these two sizes partition into arrays of 9 rows of 11 macroblocks with each macroblock being 16 pixels by 16 pixels or 18 rows of 22 macroblocks. The flames will be encoded as I pictures or P pictures; B pictures with their backward interpolation would create overly large time delays for very low bitrate transmission. An I picture occurs only once every 5 or 10 seconds, and the majority of frames are P pictures. For the 144 rows of 176 pixels size frames, roughly an I picture will be encoded with 20 Kbits and a P picture with 2 Kbits, so the overall bitrate will be roughly 22 Kbps (only 10 frames per second or less). The frames may be monochrome or color with the color given by an intensity frame (Y signal) plus one quarter resolution (subsampled) color combination frames (U and V signals).
(1) Initially, encode the zeroth frame Fo as an I picture as in MPEG-1,2 using a preferred embodiment based on wavelet transform. Compute the multi-level decomposition of the frame; separate the baseband (LLk if k levels are used) and encode it with PCM or DPCM (PCM provides simple full embbedding); for each of the three sets of higher bands (HH1, HH2, ... HHk; HL1, HL2, ... HLk; and LH1, LH2, ... LHk) separately zerotree encode the wavelet coefficients; and transmit in scan line order with the PCM of LLk interleaved for full embedding. Other frames will also be encoded as I frames with the proportion of I frames dependent upon the transmission channel bitrate. If F_{N} is to be an I picture, encode in the same manner as Fₒ.
(2) For frame F_{N} to be a P picture, detect moving objects in the frame by finding the regions of change from reconstructed F_{N-}1 to F_{N}. Reconstructed F_{N-1}, is the approximation to F_{N-1} which is actually transmitted as described below. Note that the regions of change need not be partitioned into moving objects plus uncovered background and will only approximately describe the moving objects. However, this approximation suffices and provides more efficient low coding. Of course, an alternative would be to also make this partition into moving objects plus uncovered background through mechanisms such as inverse motion vectors to determine if a region maps to outside of the change region in the previous frame and thus is uncovered background, edge detection to determine the object, or presumption of object characteristics (models) to distinguish the object from background.
(3) For each connected component of the regions of change from step (2), code its boundary contour, including any interior holes. Thus the boundaries of moving objects are not exactly coded; rather, the boundaries of entire regions of change are coded and approximate the boundaries of the moving objects. The boundary coding may be either by splines approximating the boundary or by a binary mask indicating blocks within the region of change. The spline provides more accurate representation of the boundary, but the binary mask uses a smaller number of bits. Note that the connected components of the regions of change may be determined by a raster scanning of the binary image mask and sorting pixels in the mask into groups, which may merge, according to the sorting of adjacent pixels. The final groups of pixels are the connected components (connected regions). For example of a program, see Ballard et al, Computer Vision (Prentice Hall) at pages 149-152. For convenience in the following the connected components (connected regions) may be referred to as (moving) objects.
(4) Remove temporal redundancies in the video sequence by motion estimation of the objects from the previous frame. In particular, match a 16 by 16 block in an object in the current frame F_{N} with the 16 by 16 block in the same location in the preceding reconstructed frame F_{N-1} plus translations of this block up to 15 pixels in all directions. The best match defines the motion vector for this block, and an approximation F'N to the current frame F_{N} can be synthesized from the preceding frame F_{N-1} by using the motion vectors with their corresponding blocks of the preceding frame.
(5) After the use of motion of objects to synthesize an approximation F'_{N}, there may still be areas within the frame which contain a significant amount of residual information, such as for fast changing areas. That is, the regions of difference between F_{N} and the synthesized approximation F_{N} have motion segmentation applied analogous to the steps (2)-(3) to define the motion failure regions which contain significant information.
(6) Encode the motion failure regions from step (5) using a waveform coding technique based on the DCT or wavelet transform. For the DCT case, tile the regions with 16 by 16 macroblocks, apply the DCT on 8 by 8 blocks of the macroblocks, quantize and encode (runlength and then Huffman coding). For the wavelet case, set all pixel values outside the regions to a constant (e.g., zero), apply the multi-level decomposition, quantize and encode (zerotree and then arithmetic coding) only those wavelet coefficiencts corresponding to the selected regions.
(7) Assemble the encoded information for I pictures (DCT or wavelet data) and P pictures (objects ordered with each object having contour, motion vectors, and motion failure data). These can be codewords from a table of Huffman codes; this is not a dynamic table but rather generated experimentally.
(8) Insert resynchronization words at the beginning of each I picture data, each P picture, each contour data, each motion vector data, and each motion failure data. These resynchronization words are unique in that they do not appear in the Huffman codeword table and thus can be unambiguously determined.
(9) Encode the resulting bitstream from step (8) with Reed-Solomon codes together with interleaving. Then transmit or store.
(10) Decode a received encoded bitstream by Reed-Solomon plus deinterleaving. The resynchronization words help after decoding failure and also provide access points for random access. Further, the decoding may be with shortened Reed -Solomon decoders on either side of the deinterleaver plus feedback from the second decoder to the first decoder (a stored copy of the decoder input) for enhanced of error correction.
(11) Additional functionalities such as object scalability (selective encoding/decoding of objects in the sequence) and quality scalability (selective enhancement of the quality of the objects) which result in a scalable bitstream are also supported.

The preferred embodiments may be varied in many ways while retaining one or more of their features at separate encoding of the highest LL band and zerotree encoding of LHk, ... ,LHl, HLk, ... HL1, HHk, ... HHl bands. For example, the size of frames, decomposition levels, thresholds, quantization levels, symbols, and so forth can be changed. Generally, subband filtering of other types such as QMF and Johnston could be used in place of the wavelet filtering provided that the region of interest based approach is maintained. Images with one or three or more dimensions can analogously be encoded by decomposition and separate encoding of the higheste level lowpass filtered image.

## Claims

1. A method of encoding an image, comprising the steps of:
decomposing an image into k levels of subbands by lowpass and highpass filtering;
encoding the lowest subband;
encoding the subbands other than said lowest subband with zerotree encoding.
